Europäisches Patentamt

European Patent Office

Office européen des brevets

(19)

(11) **EP 1 209 214 A2**

(12) **EUROPEAN PATENT APPLICATION**

(43) Date of publication:
29.05.2002 Bulletin 2002/22

(51) Int Cl.[7]: **C10J 3/48**

(21) Application number: **01204402.0**

(22) Date of filing: **19.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Toyo Engineering Corporation<br>Tokyo 105-0003 (JP)** |
| (30) Priority: **21.11.2000 JP 2000353998** | (72) Inventor: **Katayama, Yukuo<br>Tokyo 160-0015 (JP)** |
| (71) Applicants:<br>• **Katayama, Yukuo<br>Tokyo 160-0015 (JP)** | (74) Representative: **Bawden, Peter Charles<br>Bawden & Associates,<br>4 The Gatehouse,<br>2 High Street<br>Harpenden, Hertfordshire AL5 2TH (GB)** |

(54) **Method for the gasification of coal**

(57)    The present invention is a method for the gasification of coal wherein a slurry of coal and water is supplied to a gasification reactor, characterized in that at least a part of the water is supplied in a form of steam to the gasification reactor. This method solves all of the aforesaid problems in the conventional method for supplying a coal/water slurry to a gasification reactor and attains a remarkably high efficiency.

Fig. 1

EP 1 209 214 A2

**Description**

BACKGROUND OF THE INVENTION

FIELD OF THE INVENTION

The present invention relates to a method for the gasification of coal, more specifically to a method for the gasification of coal wherein a mixture comprising coal and water is supplied to a gasification reactor.

DESCRIPTION OF THE PRIOR ART

There are two types of known methods for supplying coal to a gasification reactor: the Shell method comprises pneumatically transporting pulverized coal with pressurized nitrogen and spraying the coal into a gasification reactor; and the Texaco method and the Dow method comprise preparing a slurry of coal and water, which hereinafter will be referred to as "coal/water slurry", and supplying the coal/water slurry to a gasification reactor (see, e.g., John E.MacDaniel et al., "Tampa Electric Company Polk Power Station IGCC Project", 1999 Gasification Technology Conference, San Francisco, California, October 17-20, 1999, and FLUOR DANIEL, INC., "Evaluation of a 510-MWe Destec GCC Power Plant Fueled With Illinois No.6 coal", Electric Power Research Institute, June, 1992). The latter method, wherein a coal/water slurry is supplied, is more reliable and adaptable to a higher gasification pressure than the former method wherein coal is supplied in a dry state. However, the latter method has some drawbacks. The slurry contains 30 to 45 wt.% of water, which vaporizes then in the gasification reactor. A part of the energy produced by a partial oxidation of the coal is used as a latent heat of vaporization, which lowers a temperature in the gasification reactor, which in turn causes increase in an amount of unburned carbon and plugging of a draw out line for melted coal ash with the melt coal ash adhered to the line. To prevent the temperature decrease, a larger amount of oxygen than a theoretically required amount calculated from an elemental composition of the coal has to be supplied to a gasification reactor in the aforesaid method. Also, it is troublesome to use coal- containing ash with a higher melting point in those methods, because an internal temperature of the gasification reactor must be maintained relatively higher. When such coal is unavoidably used, an expensive melting point depressant materials should be used. In addition, a further larger amount of oxygen is required to a little raise the internal temperature of gasification reactor to promote melting of the coal ash in the gasification reactor so as to facilitate withdrawal of the coal ash from the gasification reactor bottom to thereby operate the gasification plant smoothly. As a result of these problems, gasification efficiency of the conventional method is low.

SUMMARY OF THE INVENTION

The present invention is to provide a method for the gasification of coal, which solves all of the aforesaid problems in the conventional method for supplying a coal/water slurry to a gasification reactor and attains a remarkably high efficiency.

The present inventor has found that the aforesaid problems can be solved by vaporizing a part, preferably substantially all, of the water contained in a coal/water slurry and supplying the coal together with the steam to the gasification reactor.

Thus, the present invention is a method for the gasification of coal wherein coal and water are supplied to a gasification reactor, characterized in that at least a part of the water is supplied in a form of steam to a gasification reactor.

The present method can prevent a temperature lowering in a gasification reactor, which lowering is a problem of the conventional method of supplying a coal/water slurry to a gasification reactor. In the present method, an internal temperature of a gasification reactor can be made higher by 800 to 1000°C than a conventional oxygen-blow method with the same amount of oxygen introduction, or 400 to 500°C than a conventional air-blow method with the same amount of air introduction as that in the conventional method, because the energy generated from complete combustion of a part of the coal is not consumed for vaporization of water any longer in the present method. In other words, a less amount of oxygen or air than in the conventional method is sufficient to maintain the internal temperature of 1300 °C.

Earticularly in the gasification with oxygen, the internal temperature of a gasification reactor can be made greatly higher, so that an amount of oxygen can be less than a theoretical amount calculated from an elemental composition of the coal. Provided that the gasification reaction temperature is 1300°C or higher and the gasification time is 2 seconds or longer, the steam reforming reaction represented by the following equation is more pronouncing, whereby a higher conversion can be achieved.

# EP 1 209 214 A2

$$C + H_2O = CO + H_2$$

In addition, deposition of unburned carbon can be prevented. Further, owing to the high internal temperature of a gasification reactor, coal-containing ash with a high melting point can be easily used without a melting point depressant, so that a wide variety of coal may be utilized.

Preferred embodiments of the above invention are as follows.

(1) The method described above, wherein substantially all of the water is supplied in a form of steam to the gasification reactor.

(2) The method described above, wherein a mixture is supplied to the gasification reactor, the mixture being obtained by heating the slurry of coal and water to 150°C to 450°C at a pressure of 0.2 to 11.5MPa to thereby vaporize at least a part of the water.

(3) The method described above, wherein a mixture is supplied to the gasification reactor, the mixture being obtained by heating the slurry of coal and water to 200°C to 400°C at a pressure of 0.3 to 11 MPa to thereby vaporize at least a part of the water.

(4) The method described above, wherein a mixture is supplied to the gasification reactor, the mixture being obtained by heating the slurry of coal and water to 250°C to 350°C at a pressure of 0.5 to 10.5MPa to thereby vaporize at least a part of the water.

(5) The method described above, wherein the slurry of coal and water is heated with a heating medium having a temperature of 200 to 600°C.

(6) The method described above, wherein a water content is in a range of from 27 to 50 wt.% based on a total weight of the slurry.

(7) The method described above, wherein a water content is in a range of from 30 to 45 wt.% based on a total weight of the slurry.

(8) The method described above, wherein the coal is pneumatically transferred by steam into the gasification reactor, the steam being obtained by heating the slurry of coal and water.

BRIEF DESCRIPTION OF THE DRAWING

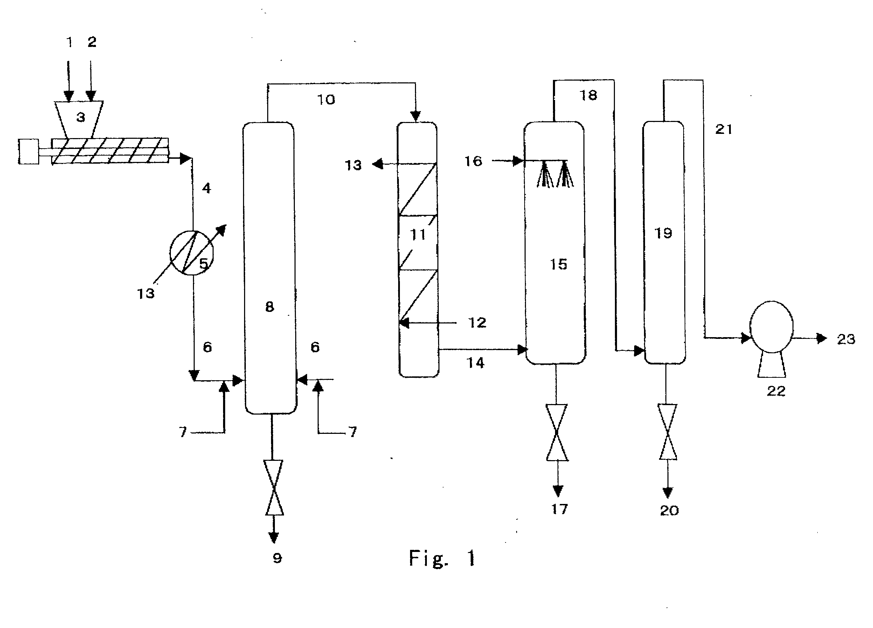

Fig.1 is a process flow diagram showing an example of embodiments of the present invention.

DESCRIPTION OF THE PREFERRED EMBODIMENTS

An embodiment of the present invention will be explained in detail with reference to Fig. 1. In a first step, coal 1 and water 2 are supplied to and mixed in mixer 3 to prepare a mixture comprising coal and water, i.e., a coal/water slurry. A water content in the slurry is preferably at most 50 wt.%, more preferably at most 45 wt.% and at least 27 wt. %, more preferably at least 30 wt.%, based on a total weight of the slurry. Accordingly, a coal content is preferably at most 73 wt.%, more preferably at most 70 wt.% and at least 50 wt.%, more preferably at least 55 wt.%, based on a total weight of the slurry. If the water content is higher than the aforesaid upper limit, or the coal content is lower than the aforesaid lower limit, an uneconomically huge amount of energy is required to vaporize water. On the other hand, if the water content is lower than the aforesaid lower limit, or the coal content is higher than the aforesaid upper limit, the coal/water slurry is too viscous to be smoothly transferred by a pump into heater 5. A surfactant may be added to facilitate dispersion of coal in water.

Various kinds of coal of various coal ranks may be used for the present gasification. Bituminous coal, sub-bituminous coal, and brown coal are preferably used. In a conventional method where a coal/water slurry is supplied to a gasification reactor, a high melting point coal ash is difficult to use. In the present invention, on the other hand, no such limitation is imposed by a melting point of ash. In the present invention, the coal preferably has a particle size of 25 to 500 mesh, more preferably 100 to 200 mesh. If the size of the coal is too large, the coal particle sediments unfavorably fast in water. The coal is pulverized preferably in a dry state before being mixed with water, but it may be pulverized in a wet state after being mixed with water.

The slurry thus prepared is supplied to a pump (not shown in Fig.1) with a feeder. The slurry is pressurized to a predetermined pressure by the pump and supplied to heater 5. The upper limit of the pressure is preferably 11.5 MPa, more preferably 11MPa, particularly 10.5MPa and the lower limit of the pressure is preferably 0.2MPa, more preferably 0.3MPa, particularly 0.5MPa. If the pressure exceeds the aforesaid upper limit, huge costs are required to make apparatuses to be pressure-proof. If it is lower than the aforesaid lower limit, the coal cannot be smoothly transported to a gasification reactor by steam generated by heating the water in the slurry. The heating temperature may be such that at least a part of the water, preferably substantially all the water, of the slurry is vaporized under the aforesaid pressure. The upper limit of the heating temperature is preferably 450 °C, more preferably 400 °C, particularly 350 °C, and the lower limit is preferably 150 °C, more preferably 200 °C, particularly 250 °C. If the temperature is higher than the aforesaid upper limit, thermal decomposition of the coal becomes vigorous, so that hydrocarbon substances formed by the decomposition tend to form cokes which tends to plug heating pipes. If the temperature is lower than the aforesaid lower limit, the water cannot be vaporized sufficiently.

As heater 5, any heater may be used which can heat the slurry to the aforesaid temperature. Preferably, use is made of a heat exchanger using a heating medium such as high-temperature steam, hot oil, molten salts or gases. A temperature of the heating medium is preferably in the range of from 200 to 600 °C, more preferably from 200 to 450 °C. If it is higher than the aforesaid upper limit, hydrocarbon substances formed by thermal decomposition of the coal and the formed cokes plug heating pipes. If it is lower than the aforesaid lower limit, it is difficult to heat the coal/water slurry to the temperature described above. Examples of the aforesaid heating medium include high-temperature steam or molten salt produced by heat exchanging with the gasification gases of a high temperature of 1000 to 1500°C produced in the gasification of coal, or the high-temperature gasification gas itself.

The coal/water slurry is heated to the aforesaid temperature as described above and the water, preferably, substantially all of the water is vaporized. The steam pneumatically transports the coal via line 6 into gasification reactor 8, where oxygen or air is introduced from line 7. The amount of the oxygen to be introduced is preferably at most 1.1 times, more preferably 1.0 time and preferably at least 0.5 time, more preferably 0.8 time as much as a required molar amount of oxygen calculated by subtracting a molar amount of oxygen in the feed coal from a half of the molar amount of carbon in the feed coal. If the oxygen amount is larger than the aforesaid upper limit, more amount of carbon dioxide is produced due to oxidation of the coal with an excess amount of oxygen, which results in a lowered efficiency of the gasification. If the amount is smaller than the aforesaid lower limit, an internal temperature of a gasification reactor cannot be high enough and, as a result, the gasification reaction does not take place sufficiently and also the plugging problem may be caused by adhered melted coal ash in a melted ash draw out line. When air is used, the amount of air to be introduced is preferably at most 1.5 times, more preferably 1.15 times and preferably at least 1.0 time, more preferably 1.01 times as much as the required molar amount of oxygen. If the amount is outside the aforesaid range, the same problems as described above may occur.

By introducing oxygen or air, the internal temperature of gasification reactor 8 is made to be preferably in the range of from 1000 to 2500°C, more preferably from 1300 to 2000°C whereby the partial oxidation gasification and steam reforming gasification of the coal occur. Gasification reactor 8 is operated at such a pressure that the aforesaid mixture of steam and coal can be supplied to the gasification reactor, i.e., a pressure which is slightly lower, preferably lower by 0.1 to 1.5 MPa, than the pressure of the mixture. The pressure of gasification reactor 8 is preferably in the range of from 0.1 to 10 MPa, more preferably from 0.5 to 10MPa, particularly from 1 to 10 MPa.

If a temperature of the gas resulting from the gasification of the coal, which gas is hereinafter referred to as "gasification gas", is higher than 1500°C, cooling by a steam cooling unit provided on an internal wall of the gasification reactor 8 is not enough, so that the gasification gas cooled, preferably, to about 250°C, preferably, in waste heat boiler 11 is introduced at an upper part of the gasification reactor 8 to thereby cool the gas preferably to about 1200°C to protect the gasification reactor wall.

Most of coal ash melted at a high temperature by combustion of coal is discharged as slag via exhaust line 9. Preferably, the gasification gas, preferably cooled to about 1200 °C, is transferred via line 10 to waste heat boiler 11. In waste heat boiler 11, the gas is cooled preferably to about 250 °C by steam from low-temperature steam line 12. High-temperature and high-pressure steam produced in waste heat boiler 11 is recovered from high-temperature steam line 13, a part of which may be preferably used for heating the coal/water slurry.

The gas cooled, preferably to about 250 °C, is preferably transferred via line 14 to water scrubber 15 wherein ammonia and a trace amount of remaining dust are removed with water shower 16 and the clean gas exits via line 17. The gas thus cleaned with water and cooled to about 40 °C is preferably transferred to acidic gas absorber 19 via line 18 to be free of hydrogen sulfide. Acidic gases such as hydrogen sulfide is purged via line 20. The purified gasification gas is recovered as product gas 23 via line 21 preferably by blower 22.

The aforesaid process flow is one embodiment of the present invention and should not be considered to be restrictive. Any apparatuses may be used in the present invention, which are used in the any known methods for the gasification of coal, such as the Texaco method and the Dow method, as far as water in a coal/water slurry is vaporized and the resulting mixture containing steam is supplied to a gasification reactor.

Examples

The present invention will be explained in detail with reference to the following Examples, but shall not be limited to those.

Examples and Comparative Examples are based on computer simulation, wherein 100kg/day of coal with the composition shown in Table 1 and the properties in Table 2 are gasified at the temperatures under the introduction of oxygen and/or air in the amounts described in Table 5 at a pressure of 2 MPa, and material balance and heat balance of the gasification are calculated.

Elemental composition of the coal used is as shown in Table 1.

Table 1

| Element | Content (DAF-base) |
|---------|--------------------|
| C | 79.49 wt.% |
| H | 5.75 wt.% |
| N | 1.70 wt.% |
| S | 1.50 wt.% |
| O | 11.56 wt.% |

An ash content and a higher heating value (HHV) of the coal and a melting point of the ash are as shown in Table 2.

Table 2

| Ash content | 6.47 wt.% |
|-------------|-----------|
| Melting point of ash | 1150°C |
| HHV | 7200 kcal/kg·coal |

Example 1

Using the process flow shown in Fig.1, gasification of the coal having the aforesaid composition is carried out. Oxygen is introduced in the gasification reactor.

One hundred kg/day of pulverized coal having a particle size of 150 to 200 mesh and 56.7 kg/day of water are mixed in mixer 3 to prepare a coal/water slurry with a water concentration of about 40 wt.%. The slurry is supplied to a pump (not shown) by a feeder. The slurry is pressurized to about 2.5MPa with the pump and directed to heater 5 via line 4. In heater 5, the slurry is heated to about 350°C with steam 13 of about 450 °C generated by heat exchange with a high-temperature gasification gas in waste heat boiler 11, whereby almost all of the water in the slurry is vaporized. The resultant gas-solid flow comprising steam and coal is supplied via line 6 to gasification reactor 8.

In gasification reactor 8, 75 kg/day of oxygen, which corresponds to 85% of the required amount of oxygen, is introduced. As a result, an internal temperature of gasification reactor 8 is about 1300°C and the feed coal is gasified by partial oxidation and steam reforming. Most of the coal ash melted at a high temperature by the combustion exits as slag via line 9 at a rate of 6.47 kg/day.

The gasification gas cooled to about 1200 °C is sent via line 10 to waste heat boiler 11 at a rate of 236.4 kg/day. In waste heat boiler 11, the gasification gas is cooled to about 250 °C by steam from low-temperature steam line 12. Steam at a high-pressure and a high-temperature of 560 °C is produced by heat exchange in waste heat boiler 11 and is recovered in high-temperature steam line 13, a part of which is used for heating the slurry.

The gasification gas cooled to about 250 °C is sent via line 14 to water scrubber 15 where 3g/day of ammonia and a trace amount of remaining dust are removed by water shower 16. The ammonia and the dust removed exit from line 17. The gas scrubbed with water and cooled to about 40 °C is sent via line 18 to acidic gas absorber 19 where hydrogen sulfide is removed. Hydrogen sulfide and other acidic gases at a rate of 1.4 kg/day are drawn out via line 20. The gasification gas thus purified is recovered at a rate of 200.0 kg/day as product gas 23 via line 21 with blower 22. The composition of the product gas is as shown in Table 3.

Table 3

| Component | Content (vol. %) |
|-----------|------------------|
| $H_2$ | 46.2 |
| CO | 52.7 |
| Ar | 0.5 |
| $N_2$ | 0.6 |
| Total | 100.0 |

In this Example, about 80Mcal/day of energy is consumed for heating the coal/water slurry, which energy is provided by burning the coal. In Example 1, a conversion from coal to gas (i.e., cool gas efficiency) is 89.8%. An overall heat efficiency (i.e., plant efficiency) is 77.0%, which is calculated from total heating value of the product gas and a sum of HHV of the feed coal, the latent heat of vaporization and an additional process heat consumption as seen below: (total heating value of the product gas) x 100 / (HHV of the feed coal + latent heat of vaporization + process heat consumed) = (646.6 Mcal) x 100/( 720 Mcal+ 80 Mcal + 40 Mcal) = 77.0 %.

The energy used in the process is provided by burning the coal. A heating value of the product gas is 3000 kcal/Nm$^3$.

Comparative Example 1

The gasification of coal is carried out in the same manner as in Example 1 except that a coal/water slurry is supplied to a gasification reactor 8 without being heated to vaporize water. In gasification reactor 8, 95 kg/day of oxygen, which corresponds to 107.7% of a required amount of oxygen, is introduced. As a result, an internal temperature of gasification reactor 8 is about 1300°C and the feed coal is gasified by partial oxidation and steam reforming.

The slurry is not heated, so that the water does not vaporize. Accordingly, about 80 Mcal/day of energy to be produced by combustion of the coal as in Example 1 is not required. In Comparative Example 1, a conversion from coal to gas (cool gas efficiency) is 78.0%. An overall heat efficiency (plant efficiency) is 73.9%, which is calculated as seen below:

$$(561.6 \text{ Mcal}) \times 100/(720 \text{ Mcal} + 40 \text{ Mcal}) = 73.9 \%$$

A heating value of the product gas is 2996 kcal/Nm$^3$.

Example 1 and Comparative Example 1 are conducted to compare the present gasification with the conventional one, both accompanied with oxygen introduction. In Example 1, the cool gas efficiency is much higher than that in Comparative Example 1, and the total process efficiency of Example 1 is also higher than that in Comparative Example 1. This is because the coal/water slurry is heated before being supplied to a gasification reactor and a mixture of steam and coal thus obtained is fed in the gasification reactor, so that the amount of oxygen to be introduced to maintain the temperature of the gasification reactor at about 1300°C can be decreased in Example 1, compared with Comparative Example 1. As a result, oxygen consumption is reduced and the steam reforming reaction proceeds further, whereby more hydrogen can be produced.

Example 2

The gasification of coal is carried out in the same manner as in Example 1 except that air is introduced instead of oxygen.

A mixture of coal and water is directed to gasification reactor 8 in the same manner as in Example 1.

In gasification reactor 8, 397.7kg/day of air, which corresponds to 93kg/day of oxygen which in turn corresponds to 105.4% of a required amount of oxygen, is introduced via line 7. This makes an internal temperature of gasification reactor 8 about 1300°C, and allows the fed coal to be partial oxidation gasified and steam reforming gasified. Most of the coal ash melted at a high temperature by the combustion exits as slag via line 9 at a rate of 6.47 kg/day.

The gasification gas cooled to about 1200 °C at a rate of 557.6 kg/day is treated in waste heat boiler 11, water scrubber 15 and acidic gas absorber 19 in the same manner as in Example 1. The gas thus purified is recovered as product gas 23 at a rate of 506.3 kg/day. The composition of the product gas is as shown in Table 4.

Table 4

| Component | Content (vol. %) |
|---|---|
| H$_2$ | 18.5 |
| CO | 25.0 |
| Ar | 0.3 |
| N$_2$ | 56.2 |
| Total | 100.0 |

In Example 2, a conversion from coal to gas (a cool gas efficiency) is 79.2%. An overall heat efficiency (plant efficiency) is 70.8%, which is calculated below in the same manner as in Example 1:

$$(570 \text{ Mcal}) \times 100/(720 \text{ Mcal} + 80 \text{ Mcal} + 5 \text{ Mcal}) = 70.8 \%$$

The reason why the additional process energy consumption is less than that in Example 1 is that energy recovered from a high-temperature nitrogen gas contained in air can be used as process consumption energy. A heating value of the product gas is 1318 kcal/Nm$^3$ due to the fact that about 56 vol.% of nitrogen gas is contained in the product gas.

Comparative Example 2

The gasification of coal is carried out in the same manner as in Example 2 except that a coal/water slurry is supplied to a gasification reactor 8 without being heated to vaporize water.

In gasification reactor 8, 470.45kg/day of air, which corresponds to 124.7% of a required amount of oxygen, is introduced. As a result, an internal temperature of gasification reactor 8 is about 1300°C as in Example 2 and the feed coal is gasified by partial oxidation and steam reforming.

In Comparative Example 2, the slurry is not heated to vaporize the water and, therefore, about 80 Mcal/day of energy to be produced by combustion of the coal as in Example 2 is not required. A conversion from coal to gas (cool gas efficiency) is 69.1%. An overall heat efficiency (plant efficiency) is 69.1%, which is calculated below:

$$(497.8 \text{ Mcal}) \times 100/(720 \text{ Mcal}) = 69.1 \%$$

A heating value of the product gas is 1098.5 kcal/Nm$^3$.

Example 2 and Comparative Example 2 are conducted to compare the present gasification with the conventional one, both with air introduction. In Example 2, the cool gas efficiency and the heating value are remarkably higher than those in Comparative Example 2, and the overall heat efficiency is a little higher. The reason for this is as described above in the comparison between Example 1 and Comparative Example 1. In Example 2, the gasification of coal is carried out with air introduction. As a result, the amount of oxygen actually required cannot be so smaller as in the gasification with oxygen introduction, so that the increase in the heating value is smaller.

Table 5 summarizes material balance and energy consumption in the processes in Examples 1 and 2 as well as Comparative Examples 1 and 2 calculated by a computer, based on materials and their enthalpies at the inlet of the gasification reactor.

In the present method, because water contained in a coal/water slurry is vaporized and then supplied to a gasification reactor, inner temperature of a gasification reactor can be maintained at a high temperature more easily, so that coal ash is melted more readily than the conventional method wherein water in a coal/water slurry is vaporized in the gasification reactor, and improvements in heating value of the gasification gas and plant efficiency are attained.

## Table 5

| | Section No. | % | Example 1 6-7 kg·mol | Example 1 11 kg·mol | Example 1 23 kg·mol | Comparative Example 1 6-7 kg·mol | Comparative Example 1 11 kg·mol | Comparative Example 1 23 kg·mol | Example 2 6-7 kg·mol | Example 2 11 kg·mol | Example 2 23 kg·mol | Comparative Example 2 6-7 kg·mol | Comparative Example 2 11 kg·mol | Comparative Example 2 23 kg·mol |
|---|---|---|---|---|---|---|---|---|---|---|---|---|---|---|
| **Coal/water slurry** — Coal in slurry Elemental composition (DAF) C= | | 79.49 | 6.190 | | | 6.190 | | | 6.190 | | | 6.190 | | |
| H= | | 5.75 | 2.668 | | | 2.668 | | | 2.668 | | | 2.668 | | |
| N= | | 1.70 | 0.057 | | | 0.057 | | | 0.057 | | | 0.057 | | |
| S= | | 1.50 | 0.044 | | | 0.044 | | | 0.044 | | | 0.044 | | |
| O= | | 11.56 | 0.338 | | | 0.338 | | | 0.338 | | | 0.338 | | |
| Ash (%) | | 6.47 | | | | | | | | | | | | |
| HHV (kcal/kg) | | | | | | | | | | | | | | |
| Water in slurry | | 40.00 | 7.200 | | | 7.200 | | | 7.200 | | | 7.200 | | |
| | | | 3.702 | | | 3.702 | | | 3.702 | | | 3.702 | | |
| **Gasifier** — Oxygen gas for gasification (40°C) | | | 2.344 | | | 2.969 | | | 2.906 | | | 3.438 | | |
| Nitrogen gas for gasification (40°C) | | | 0.000 | | | 0.000 | | | 10.799 | | | 12.773 | | |
| Ar (40°C) | | | 0.048 | | | 0.060 | | | 0.059 | | | 0.070 | | |
| **Product gas characteristics** — Carbon loss | | | | 0.062 | | | 0.062 | | | 0.062 | | | 0.062 | |
| $H_2$ | | | | 4.442 | 4.442 | | 3.959 | 3.859 | | 3.567 | 3.567 | | 2.998 | 2.998 |
| CO | | | | 5.074 | 5.074 | | 4.293 | 4.293 | | 4.824 | 4.824 | | 4.332 | 4.332 |
| $CO_2$ | | | | 1.053 | 0.000 | | 1.830 | 0.000 | | 1.303 | 0.000 | | 1.794 | 0.000 |
| $CH_4$ | | | | 0.000 | 0.000 | | 0.004 | 0.000 | | 0.000 | 0.000 | | 0.000 | 0.000 |
| COS | | | | 0.001 | 0.000 | | 0.001 | 0.000 | | 0.001 | 0.000 | | 0.001 | 0.000 |
| $H_2S$ | | | | 0.043 | 0.000 | | 0.043 | 0.006 | | 0.043 | 0.000 | | 0.043 | 0.000 |
| $N_2$ | | | | 0.057 | 0.057 | | 0.057 | 0.057 | | 10.856 | 10.856 | | 12.830 | 12.830 |
| Ar | | | | 0.048 | 0.048 | | 0.060 | 0.060 | | 0.059 | 0.059 | | 0.070 | 0.070 |
| $NH_3$ | | | | 0.000 | 0.000 | | 0.000 | 0.000 | | 0.000 | 0.000 | | 0.000 | 0.000 |
| $H_2O$ | | | | 1.885 | 0.000 | | 2.361 | 0.000 | | 2.750 | 0.000 | | 3.330 | 0.000 |
| Total (kg·mol) | | | | 12.665 | 9.621 | | 12.670 | 8.369 | | 23.475 | 19.306 | | 25.460 | 20.230 |
| Heating value of product gas (kcal/Nm³) | | | | 2,279.200 | 3,000.319 | | 1,978.803 | 2,995.750 | | 1,083.998 | 1,318.058 | | 872.875 | 1,098.528 |
| Total heating value of product gas (M cal/day) | | | | 646.600 | 646.600 | | 561.600 | 561.600 | | 570.000 | 570.000 | | 497.800 | 497.800 |
| Gasification reactor temperature (°C) | | | | 1.335 | | | 1.310 | | | 1.375 | | | 1.300 | |
| amount of oxygen supplied/theoretically required amount of oxygen (%) | | | | 85.0 | | | 107.7 | | | 105.4 | | | 124.7 | |
| Cool gas efficiency (%) (Total heating value of product gas/ HHV of feed coal) | | | | 89.8 | | | 78.0 | | | 79.2 | | | 69.1 | |
| Process energy (M cal/day) | | | | 120.000 | | | 40.000 | | | 85.000 | | | 0.000 | |
| Plant efficiency (%) (Total heating value of product gas/HHV of feed coal + process energy) | | | | 73.0% | | | 73.9% | | | 70.8% | | | 69.1% | |

## Claims

1. A method for the gasification of coal wherein a slurry of coal and water is supplied to a gasification reactor, **characterized in that** at least a part of the water is supplied in a form of steam to the gasification reactor.

2. The method for the gasification of coal according to claim 1, wherein substantially all of the water is supplied in a form of steam to the gasification reactor.

3. The method for the gasification of coal according to claim 1, wherein a mixture is supplied to the gasification reactor, the mixture being obtained by heating the slurry of coal and water to 150°C to 450°C at a pressure of 0.2 to 11.5MPa to thereby vaporize at least a part of the water.

4. The method for the gasification of coal according to claim 3, wherein the slurry of coal and water is heated with a heating medium having a temperature of 200 to 600°C.

5. The method for the gasification of coal according to claim 1, wherein a water content is in a range of from 27 to 50 wt.% based on a total weight of the slurry.

6. The method for the gasification of coal according to claim 1, wherein the coal is pneumatically transferred by steam into the gasification reactor, the steam being obtained by heating the slurry of coal and water.

Fig. 1